# FASCICULE DE BREVET EUROPEEN

(11) **EP 1 663 895 B1**
(45) Date de publication et mention de la délivrance du brevet: **09.11.2016**
(21) Numéro de dépôt: 04786330.3
(22) Date de dépôt: 19.08.2004
(51) Int. Cl.: C03C 17/36

(54) **SUBSTRAT TRANSPARENT REVETU D UN EMPILEMENT DE COUCHES MINCE S A PROPRIETES DE REFLEXION DANS L INFRAROUGE ET/OU DANS LE DOMAINE DU RAYONNEMENT SOLAIRE**
MIT EINEM STAPEL VON DÜNNEN SCHICHTEN MIT REFLEXIONSEIGENSCHAFTEN IM INFRAROT- UND/ODER SONNENSTRAHLUNGSBEREICH BEDECKTES TRANSPARENTES SUBSTRAT
TRANSPARENT SUBSTRATE WHICH IS COVERED WITH A STACK OF THIN LAYERS HAVING REFLECTION PROPERTIES IN INFRARED AND/OR SOLAR RADIATION

(30) Priorité: 20.08.2003 FR 0310045
(43) Date de publication de la demande: 07.06.2006
(73) Titulaire: SAINT-GOBAIN GLASS FRANCE, 92400 Courbevoie (FR)
(72) Inventeur: LABROUSSE, Laurent, 38370 SAINT PRIM (FR); NADAUD, Nicolas, F-94250 Gentilly (FR); PETIT JEAN, Eric, 93260 LES LILAS (FR)
(74) Mandataire: Jamet, Vincent
(86) Numéro de dépôt international: PCT/FR2004/002164
(87) Numéro de publication internationale: WO 2005/019126

(56) Documents cités:
- US-A- 4 749 397
- US-A- 5 942 338

## Description

La présente invention concerne un substrat transparent muni d'un empilement de couches minces comprenant au moins une couche métallique fonctionnelle, notamment à base d'argent, à propriétés de réflexion dans l'infrarouge et/ou dans le domaine du rayonnement solaire, au moins une couche de bloqueur métallique au contact de cette dernière et au moins une couche supérieure en diélectrique.

De tels substrats sont déjà connus dans lesquels les couches constituant l'empilement créent un système d'interférences optiques qui résulte en une transmission sélective de certaines parties du spectre solaire ou du rayonnement infrarouge.

Il est connu que de l'argent déposé comme couche fonctionnelle sur un substrat est relativement sensible aux sollicitations chimiques, notamment à l'attaque par l'oxygène, et est susceptible d'être dégradé lors du dépôt ultérieur d'une autre couche, notamment lorsque celle-ci est à base d'oxyde. Pour la protection des couches d'argent contre l'attaque par l'oxygène, les couches d'argent sont donc, en règle générale, protégées par une fine couche métallique, appelée « couche de bloqueur », appliquée par-dessus qui présente une plus grande affinité pour l'oxygène.

De manière analogue, il peut être opportun de disposer sous la couche d'argent une couche de bloqueur métallique afin de protéger la couche d'argent des flux d'oxygène provenant de la partie inférieure de l'empilement.

Ce type d'empilement est décrit notamment dans le document FR-A-2 641 271, qui concerne un substrat destiné à être incorporé dans un vitrage, portant un revêtement composé d'une sous-couche d'oxyde d'étain, de titane, d'aluminium et/ou de bismuth, puis d'une couche d'oxyde de zinc dont l'épaisseur n'est pas supérieure à 15 nm, puis d'une couche d'argent, d'une couche de recouvrement transparente comprenant une couche d'un oxyde de métal sacrificiel choisi parmi Ti, Al, acier inoxydable, Bi, Sn et leurs mélanges, et au moins une autre couche d'oxyde de Sn, Ti, Al et/ou Bi, l'oxyde de métal sacrificiel étant formé par dépôt initial du métal sacrificiel sous une épaisseur de 2 à 15 nm, et par sa conversion en oxyde afin de réaliser la couche de bloqueur.

Cette structure permet une amélioration de la résistance à la corrosion de la couche d'argent, non seulement au cours de la fabrication du substrat revêtu, mais aussi pendant la durée de vie du produit.

En pratique, seuls le titane et l'acier inoxydable sont illustrés comme métal sacrificiel, sous une épaisseur d'au moins 3,5 nm.

Le nickel-chrome est également un métal assez couramment utilisé pour constituer une couche de bloqueur dans un empilement à base d'argent. Toutefois, ces empilements ont des performances optiques limitées en terme de transmission lumineuse et des performances énergétiques qui peuvent encore être améliorées.

L'art antérieur connaît des brevets US 4,749,397 et US 5,942,338 un substrat conforme au préambule de la revendication 1.

Dans un empilement de couches connu d'après le document EP 104 870, qui concerne la production d'un revêtement à pouvoir bas-émissif par pulvérisation cathodique, on pulvérise sur une couche d'argent un ou plus d'un métal additionnel autre que l'argent en quantité équivalent à une couche de 0,5 à 10 nm d'épaisseur, avant de procéder à la pulvérisation réactive, en présence d'oxygène ou d'un gaz oxydant, sur l'argent et le métal additionnel d'une ou plus d'une couche d'oxyde métallique anti-reflet, dans des conditions qui, en l'absence du métal ou des métaux additionnels, conduiraient à des pertes substantielles des propriétés de basse émissivité du produit résultant.

Le cuivre est présenté comme métal additionnel avantageux en raison de sa résistance à l'oxydation et de sa contribution à la faible émissivité, mais d'autres métaux sont aussi envisagés qui s'oxydent dans la suite du processus de pulvérisation réactive en un oxyde incolore, favorable à une transmission lumineuse élevée. Parmi ces métaux, l'aluminium, le titane et le zirconium sont cités. D'autres métaux préférés sont Bi, In, Pb, Mn, Fe, Cr, Ni, Co, Mo, W, Pt, Au, Vd, Ta et les alliages tels que l'acier inoxydable et le laiton. Différents oxydes métalliques sont ensuite associés pour la réalisation d'un revêtement anti-reflet supérieur.

L'exemple N° 19 révèle en particulier la possibilité d'utiliser le zirconium comme métal additionnel, sur une épaisseur de 2,7 nm, sur une couche d'argent de 10 nm d'épaisseur, en association avec deux revêtements en oxyde SnO₂ respectivement d'une épaisseur de 48 nm au-dessous et de 43 nm au-dessus.

Parmi les exemples présentés, cette structure permet d'atteindre une transmission lumineuse avantageuse de 84 %.

Toutefois, la demanderesse a constaté que la tenue mécanique d'un tel empilement est médiocre, et qu'il ne résiste pas suffisamment aux opérations et manipulations nécessaires à l'intégration du substrat dans un vitrage, de sorte que ses propriétés, notamment d'émissivité et de transmission lumineuse, en sont bien sûr affectées.

L'invention a pour but de proposer un substrat muni d'un empilement de couches minces du type précité qui présente des performances élevées en terme de transmission lumineuse, de couleur de réflexion extérieure et d'émissivité, tout en présentant une bonne capacité de résistance mécanique.

Le substrat selon l'invention est défini en revendication 1 et les revendications dépendantes exposent des solutions avantageuses.

Au sens de la présente demande, les termes « inférieur » et « supérieur » définissent la position relative d'une couche par rapport à la couche fonctionnelle sans qu'il y ait nécessairement contact entre ladite couche et la couche fonctionnelle.

Au sens de la présente demande également, par « bloqueur métallique » on entend un bloqueur qui est déposé sous forme métallique ; toutefois, il est évident que cette couche peut subir une oxydation partielle au moment du dépôt (au moment de son dépôt, mais surtout au moment du dépôt de la couche suivante) ou lors d'un traitement thermique.

Il a ainsi été mis en évidence que le métal zirconium présente une sorte d'incompatibilité avec la plupart de diélectriques communément utilisés pour constituer des empilements incluant des couches métalliques fonctionnelles. La nature de cette incompatibilité n'a pas été clairement identifiée, et pourrait tenir à une question d'adhérence interlaminaire entre les couches. Le fait est que la résistance à la rayure ou à l'abrasion d'un empilement associant le zirconium à l'oxyde de zinc est satisfaisante alors que les autres empilements présentent des défauts inacceptables.

L'invention s'applique à des empilements comprenant au moins une couche fonctionnelle métallique, notamment à base d'argent, d'or ou de cuivre, éventuellement dopé avec au moins un métal additionnel, tel que le titane ou le palladium dans le cas de l'argent.

Selon l'invention, la couche de bloqueur à base de zirconium peut être disposée en dessous et/ou au-dessus de la couche métallique fonctionnelle. La couche diélectrique à base de ZnO peut être en contact direct avec un bloqueur supérieur à base de Zr, ou en contact direct, avec la couche fonctionnelle si une couche de bloqueur inférieure en zirconium est présente.

La structure selon l'invention peut ainsi être à base de la séquence : ... couche métallique fonctionnelle / Zr / ZnO ... où la couche de ZnO est en contact direct avec le zirconium.

Dans ce cas, on attribue la haute stabilité mécanique de l'empilement de couches à la bonne adhérence de l'oxyde de zinc déposé en couche mince sur la couche de zirconium, alors que les autres oxydes connus adhèrent mal sur Zr, vraisemblablement en raison d'un mauvais mouillage de l'oxyde sur le zirconium lors du dépôt de la couche mince.

L'empilement peut alors comprendre une couche de bloqueur inférieur sous l'argent à base d'un métal choisi parmi le titane, le nickel-chrome, le niobium, le zirconium, ...

La structure selon l'invention peut aussi être à base de la séquence : ... Zr / couche métallique fonctionnelle / ZnO ...

Dans ce cas, la haute stabilité mécanique de l'empilement serait due au fait que le zirconium étant utilisé en sous-bloqueur, il ne subit pas de plasma oxydant car aucun oxyde n'est déposé dessus et par conséquent est très peu oxydé par la couche déposée avant.

Un bloqueur supérieur peut éventuellement être intercalé entre la couche métallique fonctionnelle et l'oxyde de zinc, qui peut être choisi parmi le nickel-chrome, le titane, le niobium, ou le zirconium.

Une structure selon l'invention peut succéder à une autre structure selon l'invention identique ou différente dans un même empilement.

Grâce à la structure conforme à l'invention des couches strictement inférieure et/ou supérieure déposée(s) sur la couche fonctionnelle, non seulement on obtient un empilement présentant des valeurs de transmission lumineuse, de couleur de réflexion extérieure et d'émissivité très satisfaisantes, mais en plus on obtient un empilement ayant une capacité de résistance mécanique, le cas échéant et aussi chimique, étonnamment bonne.

L'épaisseur de la (ou des) couche(s) de bloqueur à base de Zr est avantageusement choisie à une valeur suffisante pour que la couche ne s'oxyde que partiellement ou pratiquement totalement - sans affecter la couche d'argent - au cours du dépôt ultérieur d'oxyde ou d'un traitement thermique en atmosphère oxydante tel que la trempe. Cette épaisseur est comprise entre 0,6 et 2 nm.

Selon l'invention, une couche de bloqueur à base de Zr est déposée de préférence par pulvérisation cathodique assistée par magnétron à partir d'une cible de zirconium métallique, qui peut éventuellement contenir un élément additionnel tel que Ca, Y, Hf, dans une proportion de 1 à 10 % en poids de la cible.

La ou chaque couche métallique fonctionnelle est typiquement une couche en argent, mais l'invention s'applique de façon identique à d'autres couches métalliques réfléchissantes, comme des alliages d'argent, contenant notamment du titane ou du palladium, ou des couches à base d'or ou de cuivre. L'épaisseur de chaque couche fonctionnelle est notamment de 5 à 18 nm, de préférence de l'ordre de 6 à 15 nm.

Le substrat selon l'invention peut comprendre une ou plusieurs couches métalliques fonctionnelles, notamment 2 ou 3, chacune d'épaisseur dans les gammes précitées. Au moins une couche fonctionnelle est associée à une couche de bloqueur à base de zirconium, et de préférence chaque couche métallique fonctionnelle est associée à une couche de bloqueur à base de zirconium. La position de la couche à base de zirconium vis-à-vis d'une couche métallique fonctionnelle n'est pas nécessairement la même que pour la ou les autres couches métalliques fonctionnelles à l'intérieur d'un empilement.

La couche diélectrique supérieure en oxyde de zinc a notamment pour fonction de protéger la couche fonctionnelle métallique sous-jacente tout en participant à l'établissement des propriétés optiques du substrat.

Cette couche peut généralement être déposée sous une épaisseur d'au moins 5 nm, notamment de l'ordre de 5 à 25 nm, plus particulièrement de 5 à 10 nm.

L'empilement peut également comprendre une couche diélectrique inférieure à base d'oxyde ou de nitrure, notamment comprenant la séquence SnO₂/TiO₂/ZnO ou la séquence Si₃N₄/ZnO.

L'empilement peut aussi comprendre une couche de protection mécanique supérieure qui a pour fonction d'améliorer la résistance mécanique de l'empilement, notamment vis-à-vis de la rayure ou de l'abrasion.

Il peut s'agir d'une couche, éventuellement dopée, à base d'oxyde, de nitrure et/ou d'oxynitrure, notamment à base d'au moins un oxyde de titane, de zinc, d'étain, d'antimoine, de silicium et de leurs mélanges éventuellement nitrurés, ou à base de nitrure, notamment à base de nitrure de silicium ou d'aluminium. On peut citer plus particulièrement TiO₂, SnO₂, Si₃N₄, ou les oxydes mixtes à base de zinc et d'étain (ZnSnOₓ), éventuellement dopés par un autre élément tel que Sb, ou à base de zinc et de titane (ZnTiOₓ) ou encore à base de zinc et de zirconium (ZnZrOₓ).

Il peut également s'agir d'une combinaison de couches à base des matières précitées, notamment Si₃N₄ / SnZnOₓ ou Si₃N₄ / TiO₂.

Parmi ces composés, le nitrure de silicium a un intérêt supplémentaire lorsque le substrat est destiné à subir un traitement thermique oxydant. En effet, il permet de bloquer la diffusion de l'oxygène vers l'intérieur de l'empilement, y compris à haute température. Le nitrure étant largement inerte face à une attaque oxydante, il ne subit aucune modification chimique (du type oxydation) ou structurelle notable lors d'un traitement thermique du type trempe. Il n'entraîne donc quasiment aucune modification optique de l'empilement en cas de traitement thermique, notamment en terme de niveau de transmission lumineuse. Cette couche peut aussi faire office de barrière à la diffusion d'espèces migrant du verre, des alcalins notamment. En outre, grâce à son indice de réfraction voisin de 2, il prend aisément place dans un empilement de couches du type bas-émissif du point de vue du réglage des propriétés optiques.

Cette couche de protection peut généralement être déposée sous une épaisseur d'au moins 10 nm, par exemple comprise entre 15 et 50 nm, notamment de l'ordre de 25 à 45 nm.

L'empilement selon l'invention conserve, de préférence, sensiblement ses propriétés notamment optiques après un traitement thermique à au moins 500°C, qu'il s'agisse notamment d'une trempe, d'un recuit ou d'un bombage.

La présente invention se rapporte également à un vitrage bas-émissif ou anti-solaire incorporant au moins un substrat tel que décrit ci-dessus et notamment un vitrage feuilleté ou un double vitrage.

En effet, le substrat revêtu peut être utilisé en vitrage feuilleté, l'empilement pouvant être accolé au film intercalaire à l'intérieur de l'assemblage feuilleté vers l'extérieur (face 2) ou vers l'intérieur (face 3). Dans un tel vitrage, au moins un substrat peut être trempé ou durci, notamment celui portant l'empilement de couches. Le substrat revêtu peut aussi être associé à un autre verre au moins par une lame de gaz pour faire un vitrage multiple isolant (double vitrage). Dans ce cas, l'empilement fait de préférence face à la lame de gaz intermédiaire (face 2 et/ou face 3). Un double vitrage selon l'invention peut incorporer au moins un verre feuilleté.

Lorsque le vitrage selon l'invention est monté en double vitrage avec un autre substrat, l'ensemble présente une transmission lumineuse comprise avantageusement entre 40 et 90%.

En outre, le vitrage selon l'invention présente avantageusement une sélectivité définie par le rapport entre la transmission lumineuse et le facteur solaire T_{L} / FS comprise entre 1,1 et 2,1.

L'invention est illustrée ci-après à l'aide d'exemples comparatifs et d'exemples selon l'invention, où l'on étudie différents bloqueurs et couches diélectriques.

A moins qu'il en soit précisé autrement, les épaisseurs des substrats et des vitrages des exemples comparatifs sont identiques aux épaisseurs des substrats et des vitrages des exemples selon l'invention auxquels ils sont comparés.

On évalue les performances optiques suivantes: transmission lumineuse, réflexion lumineuse du côté de l'empilement et couleur en réflexion dans le système LAB.

Les transmissions et réflexions lumineuses ont été mesurées avec un appareil de mesure à sphère intégrante qui mesure le flux lumineux dans toutes les directions d'un côté ou de l'autre du substrat.

On mesure les performances thermiques par l'intermédiaire de la résistance électrique de surface et de l'émissivité.

On évalue d'autre part les propriétés de résistance mécanique :
- à l'abrasion par cisaillement de l'empilement obtenues lors du test Erichsen à la brosse. On rappelle que dans ce test, on frotte l'empilement à l'aide d'une brosse à poil en matériau polymère, l'empilement étant recouvert d'eau.
- à la rayure lors du test Erichsen à la pointe. On rappelle que dans le test on déplace une pointe chargée d'un poids sur le substrat à une vitesse donnée. On note, en Newton, la charge nécessaire à la pointe pour rayer visiblement l'empilement
- à la rayure par indentation lors du test Taber. On rappelle que dans le test Taber, on soumet l'échantillon à des rouleaux abrasifs pendant un temps donné et on mesure en % la proportion de la surface du système de couches qui n'est pas arrachée après 20 tours sous 250 g.

### Exemple comparatif 1

Dans cet exemple comparatif, on dépose sur un substrat verrier d'épaisseur 4 mm un empilement à l'argent selon l'art antérieur avec un bloqueur en nickel-chrome et une couche diélectrique supérieure en oxyde d'étain. On obtient un empilement du type :
substrat / SnO₂ / TiO₂ / ZnO / Ag / NiCr /SnO₂

Cet empilement est produit par pulvérisation cathodique en faisant défiler le substrat dans une enceinte devant des cibles métalliques, dans une atmosphère d'argon pour déposer une couche de métal et dans une atmosphère d'argon et d'oxygène pour déposer un oxyde.

Les résultats des évaluations optiques et énergétiques sont consignés dans le tableau 1 ci-après.

On monte le substrat en double vitrage présentant une lame intermédiaire à 90 % d'argon d'épaisseur 15 mm, avec un deuxième élément vitré d'épaisseur 4 mm, et l'on mesure à nouveau la transmission et la réflexion lumineuse et la couleur en réflexion, ainsi que le facteur solaire et le coefficient U.

Les résultats sont consignés dans le tableau 2 ci-après.

Les résultats des évaluations mécaniques sont consignés dans le tableau 3 ci-après.

### Exemple comparatif 2

Dans cet exemple comparatif, on utilise un empilement sensiblement identique à celui de l'exemple comparatif 1. L'exemple comparatif 2 se distingue uniquement par le fait que le bloqueur en nickel-chrome est remplacé par du zirconium. On obtient un empilement du type :
substrat / SnO₂/ TiO₂ / ZnO / Ag / Zr /SnO₂

Les résultats des évaluations optiques sont consignés dans le tableau 1 en monolithique, dans le tableau 2 en double-vitrage, et des évaluations mécaniques sont consignées dans le tableau 3 ci-après.

**Tableau 1**

| Ex. | Type de bloqueur | R_{□} (Ω/□) | ε(%) | T_{L} | Réflexion côté couche | | | |
|---|---|---|---|---|---|---|---|---|
| | | | | | R_{L} | L* | a* | b* |
| Comp. 1 | NiCr | 4,5 | 4,8 | 86,2 | 4,4 | 25,0 | 4,0 | -9,9 |
| Comp. 2 | Zr | 3,8 | 3,8 | 88,3 | 4,8 | 26,2 | 3,4 | -8,3 |

**Tableau 2**

| Ex. | Type de bloqueur | T_{L} | Réflexion extérieure | | | | FS (CEN) | U (W.m⁻².K⁻¹) |
|---|---|---|---|---|---|---|---|---|
| | | | R_{L} | L* | a* | b* | | |
| Comp. 1 | NiCr | 77,5 | 11,6 | 40,6 | 0,9 | -4,9 | 62 | 1,19 |
| Comp. 2 | Zr | 79,5 | 12,0 | 41,2 | 0,7 | -4,4 | 61 | 1,15 |

On constate que le remplacement du bloqueur NiCr par un bloqueur Zr conduit à une amélioration de la couleur en réflexion côté couche (couleur plus neutre), à une augmentation de la transmission et à une diminution de la résistance par carré en monolithique.

Ceci se traduit par un double vitrage également légèrement plus neutre en réflexion extérieure, avec une transmission plus élevée et présentant des caractéristiques d'isolation thermique en double vitrage meilleures (U = 1,19 W.m⁻².K⁻¹ dans le cas du bloqueur NiCr contre U = 1,15 W.m⁻².K⁻¹ dans le cas du bloqueur Zr).

**Tableau 3**

| Exemple | Nature du bloqueur | Erichsen brosse | Erichsen pointe | Taber |
|---|---|---|---|---|
| | | | Charge pour rayure | Quantité de couche restante (%) |
| Comp. 1 | NiCr | couches très peu dégradées | 2 N | 53 |
| Comp. 2 | Zr | couches très dégradées | 1 N | 80 |

Lors du remplacement du bloqueur NiCr par Zr dans l'empilement, la tenue mécanique au test Erichsen à la brosse des empilements avec un bloqueur Zr est catastrophique : on a constaté une forte délamination de l'empilement après test.

La résistance à la rayure est également diminuée.

Seule la résistance au test Taber est améliorée, témoignant d'un comportement particulier en indentation par rapport à l'abrasion.

### Exemple 1

Dans cet exemple on dépose sur un substrat verrier du même type que pour l'exemple comparatif 1 un empilement du type :
substrat / SnO₂ / TiO₂ / ZnO / Ag / Zr / ZnO / SnO₂ 22 nm / 8 nm / 8 nm / 10 nm / 0,6 nm/ 21 nm / 22 nm

Les résultats des évaluations optiques sont consignés dans le tableau 4 en monolithique, dans le tableau 5 en double-vitrage, et des évaluations mécaniques sont consignées dans le tableau 6 ci-après.

### Exemple 2

Cet exemple se distingue uniquement de l'exemple 1 par le fait que l'on remplace la dernière couche de SnO₂ par Si₃N₄. On obtient un empilement du type :
substrat / SnO₂ / TiO₂ / ZnO / Ag / Zr / ZnO / Si₃N₄ 22 nm / 8 nm / 8 nm / 10 nm/ 0,6 nm/ 21 nm / 22 nm

### Exemples comparatifs 1bis et 2bis

Ces exemples comparatifs sont analogues aux exemples comparatifs 1 et 2 où l'épaisseur des couches a été adaptée pour être identique aux épaisseurs des couches homologues de l'exemple 1.

En pratique, les épaisseurs sont comme suit :

### Ex. Comp. 1 bis

substrat / SnO₂ / TiO₂ / ZnO / Ag / NiCr / SnO₂ 22 nm / 8 nm / 8 nm 10 nm / 0,6 nm/ 43 nm.

### Ex. Comp. 2bis

substrat / SnO₂ / TiO₂ / ZnO / Ag / Zr / SnO₂ 22 nm / 8 nm / 8 nm / 10 nm / 0,6 nm/ 43 nm.

Les résultats des évaluations optiques sont consignés dans le tableau 4 en monolithique, dans le tableau 5 en double-vitrage, et des évaluations mécaniques sont consignées dans le tableau 6 ci-après.

**Tableau 4**

| Ex | Bloqueur/ Surcouche(s) | R_{□} (Ω/□) | εₙ (%) | T_{L} | Réflexion côté couche | | | |
|---|---|---|---|---|---|---|---|---|
| | | | | | R_{L} | L* | a* | B* |
| Comp 1bis | NiCr/SnO₂ | 5,3 | 5,8 | 84,8 | 4,1 | 24,0 | 3,2 | -5,5 |
| Comp 2bis | Zr/SnO₂ | 4,6 | 5,0 | 88,5 | 4,6 | 25,5 | -0,2 | -6,7 |
| 1 | Zr/ZnO/SnO₂ | 4,8 | 5,3 | 86,8 | 4,3 | 24,7 | 1,6 | -7,1 |
| 2 | Zr/ZnO/Si₃N₄ | 4,9 | 5,4 | 86,3 | 4,5 | 25,2 | 1,5 | -8,3 |

**Tableau 5**

| Ex | Bloqueur/ Surcouche(s) | T_{L} | Réflexion extérieure | | | | FS (CEN) | U (W.m⁻²K⁻¹) |
|---|---|---|---|---|---|---|---|---|
| | | | R_{L} | L* | a* | b* | | |
| Comp 1bis | NiCr/SnO₂ | 76,2 | 11,4 | 40,2 | 0,5 | -2,7 | 62 | 1,22 |
| Comp 2bis | Zr/SnO₂ | 79,5 | 11,8 | 40,9 | -0,9 | -3,3 | 63 | 1,19 |
| 1 | Zr/ZnO/SnO₂ | 78,0 | 11,6 | 40,5 | -0,3 | -3,5 | 62 | 1,20 |
| 2 | Zr/ZnO/Si₃N₄ | 77,5 | 11,7 | 40,7 | -0,2 | -4,1 | 63 | 1,21 |

Les exemples comparatifs 1bis et 2bis montrent également que le remplacement du bloqueur NiCr par un bloqueur Zr conduit à une augmentation de la transmission lumineuse et à une diminution de l'émissivité en monolithique. En double vitrage, la transmission lumineuse augmente également et le facteur U est plus faible à épaisseur d'argent égale lorsque le bloqueur est du zirconium de préférence à du NiCr.

Les niveaux atteints par les exemples 1 et 2 démontrent une transmission lumineuse meilleure qu'avec un bloqueur NiCr, ainsi qu'une couleur plus neutre en réflexion.

**Tableau 6**

| Exemple | Nature des couches | Erichsen brosse | Erichsen pointe | Taber |
|---|---|---|---|---|
| | | | Charge pour rayure | Quantité de couche restante (%) |
| Comp. 1bis | NiCr/SnO₂ | couches très peu dégradées | 1.5 N | 53 |
| Comp. 2bis | Zr/SnO₂ | couches très dégradées | 1 N | 80 |
| 1 | Zr/ZnO/SnO₂ | couches très peu dégradées | 2 N | 79 |
| 2 | Zr/ZnO/Si₃N₄ | couches très peu dégradées | 3 N | 88 |

L'exemple 1 montre que l'insertion d'une couche de ZnO entre la couche de Zr et la couche de SnO₂ permet d'améliorer très légèrement le comportement au test Taber, mais surtout de rendre le comportement au test Erichsen similaire à celui d'un empilement avec un bloqueur NiCr.

Ce résultat est étonnant puisque lors du test Erichsen à la brosse, l'empilement de l'exemple comparatif 2 avec une séquence Zr/SnO₂ avait une très mauvaise adhésion.

D'après l'exemple 2, il est à noter que les comportements des empilements avec une couche terminale de Si₃N₄ sont encore améliorés par rapport ceux avec une couche terminale de SnO₂, avec une meilleure résistance au test Erichsen à la pointe, ainsi qu'au test Taber.

Le comportement des empilements selon l'invention aux tests chimiques à HCl et HH sous haute humidité (40°C, 90% d'humidité, pendant 5 jours) est assez semblable, voire légèrement supérieur à ce qui était déjà obtenu avec les empilements comportant un bloqueur à base de NiCr.

### Exemple 3, hors invention

Cet exemple présente un empilement à deux couches d'argent avec des couches de bloqueur inférieur en zirconium, du type :
Si₃N₄ / ZnO / Zr / Ag/ ZnO / Si₃N₄ / ZnO / Zr / Ag / ZnO / Si₃N₄ 22 / 10 /0,5/8,2/ 10 / 69 / 10 / 0,5 / 10 / 10 / 28 nm.

L'empilement est déposé sur un substrat constitué d'une feuille de verre de 1,6 mm d'épaisseur.

On évalue les performances mécaniques de l'empilement au moyen d'un test Taber, et d'un test de pelage dans lequel on applique un ruban adhésif sur les couches, on arrache le ruban et on note l'intégrité de l'empilement de couches. Les résultats des évaluations mécaniques sont consignés dans le tableau 7 ci-après.

On fait subir à ce substrat un traitement thermique de type bombage à plus de 640°C pendant 6 minutes suivi d'un refroidissement à l'air et on qualifie les évolutions optiques après le traitement thermique. Le substrat présente la même qualité optique après le traitement thermique.

Ce substrat est associé à une feuille de verre de 2,1 mm d'épaisseur dans un vitrage feuilleté utilisant un film intercalaire de PVB de 0,76 mm d'épaisseur, l'empilement de couches étant dirigé vers l'intérieur du feuilleté.

On évalue les performances optiques de l'empilement comme précédemment, et les résultats des évaluations optiques sont consignés dans le tableau 8 ci-après.

### Exemple comparatif 3bis

Cet exemple comparatif est analogue à l'exemple 3 où les couches de bloqueur en zirconium sont remplacées par des couches de nickel-chrome. On obtient un empilement du type :
Si₃N₄ / ZnO/ NiCr / Ag/ ZnO/ Si₃N₄/ ZnO / Nicr / Ag / ZnO / Si₃N₄ 22 / 10 / 0,7 / 8,2/ 10 / 69 / 10 / 0,7 / 10 / 10 / 28 nm.

On fait subir à ce substrat le même traitement thermique qu'à l'exemple 3 : après le traitement thermique, le substrat devient flou et on note l'apparition de piqûres.

Les résultats des évaluations optiques et mécaniques sont consignés dans les tableaux 7 et 8.

**Tableau 7**

| Exemple | Bloqueur | Pelage | Taber |
|---|---|---|---|
| | | | Quantité de couche restante (%) |
| Comp. 3 | NiCr | Couches intactes | 67 |
| 3 | Zr | Couches intactes | 70 |

**Tableau 8**

| Ex | Bloqueur | T_{L} | | Réflexion côté couche | | | | Tenue thermique |
|---|---|---|---|---|---|---|---|---|
| | | | R_{E} | R_{L} | L* | a* | b* | |
| Comp 3 | NiCr | 74,2 | 30,1 | 11,4 | 41,5 | -2,9 | -4,1 | Mauvais flou, piqûres |
| 3 | Zr | 76,1 | 30,0 | 10,9 | | -4,0 | -2,0 | Bonne : pas d'évolution optique |

## Revendications

1. Substrat transparent muni d'un empilement de couches minces comprenant au moins une couche métallique fonctionnelle, notamment à base d'argent, à propriétés de réflexion dans l'infrarouge et/ou dans le domaine du rayonnement solaire, au moins une couche de bloqueur métallique au contact de cette dernière et au moins une couche supérieure en diélectrique, **caractérisé en ce qu'**au moins une couche de bloqueur à base de zirconium d'une épaisseur comprise entre 0,6 et 2 nm est disposée en dessous et/ou au-dessus de la couche métallique fonctionnelle, **en ce que** ledit empilement conserve sensiblement ses propriétés notamment optiques après un traitement thermique à au moins 500°C **et en ce que** là couche diélectrique supérieure comprend au moins une couche à base de ZnO au contact de la couche métallique, fonctionnelle ou de la couche de bloqueur à base de zirconium d'une épaisseur comprise entre 0,6 et 2 nm.

2. Substrat selon la revendication 1, **caractérisé en ce que** la couche fonctionnelle est revêtue d'une couche de bloqueur supérieure à base de zirconium surmontée au moins d'une couche diélectrique à base de ZnO.

3. Substrat selon la revendication 2, **caractérisé en ce qu**'il comprend une couche de bloqueur inférieur sous l'argent à base d'un métal choisi parmi le titane, le nickel-chrome, le niobium, le zirconium.

4. Substrat selon la revendication 1, **caractérisé en ce qu**'il comprend une couche de bloqueur inférieure à base de zirconium et une couche diélectrique supérieure à base de ZnO au contact direct de la couche métallique fonctionnelle.

5. Substrat selon l'une des revendications précédentes, **caractérisé en ce qu**'il comprend une couche supérieure de protection mécanique à base d'oxyde, de nitrure et/ou d'oxynitrure, notamment de SnO₂, TiO₂, ZnSnOₓ, ZnTiOₓ, ZnZrOₓ et/ou de Si₃N₄, cette couche supérieure étant éventuellement dopée.

6. Substrat selon l'une quelconque des revendications précédentes, **caractérisé en ce que** l'épaisseur de ladite couche fonctionnelle est de 5 à 18 nm.

7. Substrat selon l'une quelconque des revendications précédentes, **caractérisé en ce que** l'épaisseur de ladite couche diélectrique, est d'au moins 5 nm, notamment comprise entre 5 et 25 nm.

8. Substrat suivant l'une quelconque des revendications précédentes, **caractérisé en ce qu'**au moins une couche de bloqueur à base de Zr est déposée par pulvérisation cathodique assistée par magnétron à partir d'une cible de zirconium métallique pouvant éventuellement contenir de 1 à 10 % en poids d'un élément additionnel tel que Ca, Y, Hf.

9. Substrat selon l'une quelconque des revendications précédentes, **caractérisé en ce que** l'empilement comprend une couche diélectrique inférieure à base d'oxyde ou de nitrure.

10. Substrat selon la revendication 9, **caractérisé en ce que** la couche diélectrique inférieure comprend la séquence SnO₂/TiO₂/ZnO.

11. Substrat selon la revendication 9, **caractérisé en ce que** la couche diélectrique inférieure comprend la séquence Si₃N_{4/}ZnO.

12. Vitrage bas-émissif ou anti-solaire et notamment vitrage feuilleté ou double vitrage incorporant au moins un substrat selon l'une quelconque des revendications précédentes.

13. Vitrage selon la revendication 12, **caractérisé en ce qu**'il comprend au moins un substrat selon l'invention monté en double vitrage avec un autre substrat et l'ensemble présente une transmission lumineuse comprise entre 40 et 90%.

14. Vitrage selon l'une quelconque des revendications 12 ou 13, **caractérisé en ce qu**'il présente une sélectivité définie par le rapport entre la transmission lumineuse et le facteur solaire T_{L} / FS comprise entre 1,1 et 2,1.

## Patentansprüche

1. Transparentes Substrat, das mit einem Stapel aus Dünnschichten versehen ist, der mindestens eine metallische Funktionsschicht, insbesondere auf Silber-Basis, mit Reflexionsvermögen im Infrarot und/oder im Bereich der Sonnenstrahlung, mindestens eine metallische Sperrschicht in Kontakt mit dieser letzten und mindestens eine obere dielektrische Schicht umfasst, **dadurch gekennzeichnet, dass** mindestens eine Sperrschicht auf Zirkonium-Basis mit einer Dicke zwischen 0,6 und 2 nm unterhalb und/oder oberhalb der metallischen Funktionsschicht angeordnet ist, dass der Stapel seine im Wesentlichen optischen Eigenschaften nach einer Wärmebehandlung bei mindestens 500 °C beibehält und dass die obere dielektrische Schicht mindestens eine Schicht auf ZnO-Basis in Kontakt mit der metallischen Funktionsschicht oder der Sperrschicht auf Zirkonium-Basis mit einer Dicke zwischen 0,6 und 2 nm umfasst.

2. Substrat nach Anspruch 1, **dadurch gekennzeichnet, dass** die Funktionsschicht mit einer oberen Sperrschicht auf Zirkonium-Basis beschichtet ist, über der mindestens eine dielektrische Schicht auf ZnO-Basis liegt.

3. Substrat nach Anspruch 2, **dadurch gekennzeichnet, dass** es eine untere Sperrschicht unter dem Silber auf Basis eines Metalls umfasst, das ausgewählt ist aus Titan, Nickel-Chrom, Niobium, Zirkonium.

4. Substrat nach Anspruch 1, **dadurch gekennzeichnet, dass** es eine untere Sperrschicht auf Zirkonium-Basis und eine obere dielektrische Schicht auf ZnO-Basis in direktem Kontakt mit der metallischen Funktionsschicht umfasst.

5. Substrat nach einem der vorhergehenden Ansprüche, **dadurch gekennzeichnet, dass** es eine obere mechanische Schutzschicht auf Basis von Oxid, von Nitrid und/oder von Oxinitrid, insbesondere von SnO₂, TiO₂, ZnSnOₓ, ZnTiOₓ, ZnZrOₓ und/oder von Si₃N₄, umfasst, wobei diese obere Schicht gegebenenfalls dotiert ist.

6. System nach einem der vorhergehenden Ansprüche, **dadurch gekennzeichnet, dass** die Dicke der Funktionsschicht von 5 bis 18 nm beträgt.

7. System nach einem der vorhergehenden Ansprüche, **dadurch gekennzeichnet, dass** die Dicke der dielektrischen Schicht mindestens 5 nm, insbesondere zwischen 5 und 25 nm, beträgt.

8. System nach einem der vorhergehenden Ansprüche, **dadurch gekennzeichnet, dass** mindestens eine Sperrschicht auf Zr-Basis durch Magnetron-gestützte Kathodenzerstäubung ausgehend von einem metallischen Zirkonium-Target aufgebracht ist, das gegebenenfalls 1 bis 10 Gewichts-% eines zusätzlichen Elements, wie Ca, Y, Hf, enthalten kann.

9. System nach einem der vorhergehenden Ansprüche, **dadurch gekennzeichnet, dass** der Stapel eine untere dielektrische Schicht auf Oxid- oder Nitrid-Basis umfasst.

10. Substrat nach Anspruch 9, **dadurch gekennzeichnet, dass** die untere dielektrische Schicht die Sequenz SnO₂/TiO₂/ZnO enthält.

11. Substrat nach Anspruch 9, **dadurch gekennzeichnet, dass** die untere dielektrische Schicht die Sequenz Si₃N₄/ZnO enthält.

12. Niedrig emittierende Verglasung oder Sonnenschutzverglasung und insbesondere Verbundverglasung oder Doppelverglasung, die mindestens ein Substrat nach einem der vorhergehenden Ansprüche umfasst.

13. Verglasung nach Anspruch 12, **dadurch gekennzeichnet, dass** sie mindestens ein Substrat gemäß der Erfindung umfasst, das als Doppelverglasung mit einem anderen Substrat montiert ist, und die Anordnung einen Lichttransmissionsgrad zwischen 40 und 90 % aufweist.

14. Verglasung nach einem der Ansprüche 12 oder 13, **dadurch gekennzeichnet, dass** sie eine Selektivität aufweist, die durch das Verhältnis zwischen dem Lichttransmissionsgrad und dem Energiedurchlassgrad tL/g zwischen 1,1 und 2,1 definiert ist.

## Claims

1. A transparent substrate provided with a thin-film multilayer comprising at least one functional metal layer, especially a silver-based layer, having reflection properties in the infrared and/or in the solar radiation range, at least one metal barrier layer in contact with the functional layer and at least one upper dielectric layer, **characterized in that** at least one barrier layer based on zirconium of a thickness between 0.2 and 6 nm is situated above and/or below the functional metal layer, **in that** said multilayer substantially retains its properties, especially optical properties, after a heat treatment at a temperature of at least 500°C **and in that** the upper dielectric layer comprises at least one ZnO-based layer in contact with the functional layer or with the barrier layer based on zirconium of a thickness between 0.2 and 6 nm.

2. The substrate as claimed in claim 1, **characterized in that** the functional layer is coated with a zirconium-based upper barrier layer surmounted at least by a ZnO-based dielectric layer.

3. The substrate as claimed in claim 2, **characterized in that** it includes, beneath the silver, a lower barrier layer based on a metal chosen from titanium, nickel-chromium, niobium, zirconium.

4. The substrate as claimed in claim 1, **characterized in that** it includes a zirconium-based lower barrier layer and an ZnO-based upper dielectric layer in direct contact with the functional metal layer.

5. The substrate as claimed in one of the preceding claims, **characterized in that** it includes an upper mechanical protection layer based on an oxide, nitride and/or oxynitride, especially SnO₂, TiO₂, ZnSnOₓ, ZnTiOₓ, ZnZrOₓ and/or Si₃N₄, this upper layer being optionally doped.

6. The substrate as claimed in any one of the preceding claims, **characterized in that** the thickness of said functional layer is from 5 to 18 nm.

7. The substrate as claimed in any one of the preceding claims, **characterized in that** the thickness of said dielectric layer is at least 5 nm, especially between 5 and 25 nm.

8. The substrate as claimed in any one of the preceding claims, **characterized in that** at least one Zr-based barrier layer is deposited by magnetron sputtering using a zirconium metal target that may optionally contain from 1 to 10% by weight of an additional element such as Ca, Y, or Hf.

9. The substrate as claimed in any one of the preceding claims, **characterized in that** the multilayer includes a lower dielectric layer based on an oxide or nitride.

10. The substrate as claimed in claim 9, **characterized in that** the lower dielectric layer comprises the sequence SnO₂/TiO₂/ZnO.

11. The substrate as claimed in claim 9, **characterized in that** the lower dielectric layer comprises the sequence Si₃N_{4/}ZnO.

12. Low-emissivity or solar-protection glazing, and especially laminated glazing or double glazing, incorporating at least one substrate as claimed in any one of the preceding claims.

13. The glazing as claimed in claim 12, **characterized in that** it comprises at least one substrate according to the invention mounted with another substrate as double glazing and the assembly has a light transmission of between 40 and 90%.

14. The glazing as claimed in either of claims 12 and 13, **characterized in that** it has a selectivity defined by the ratio of the light transmission to the solar factor, T_{L}/SF of between 1.1 and 2.1.
